# EUROPÄISCHE PATENTSCHRIFT

(11) **EP 2 018 240 B1**
(45) Veröffentlichungstag und Bekanntmachung des Hinweises auf die Patenterteilung: **17.04.2013**
(21) Anmeldenummer: 07724826.8
(22) Anmeldetag: 03.05.2007
(51) Int. Cl.: F16P 3/08, B23K 9/32, B23K 26/08, B23K 26/20, B23K 26/38, B23K 37/02, B23K 26/42, G05B 19/418

(54) **VERFAHREN ZUR DEZENTRALEN STEUERUNG EINER BEARBEITUNGSMASCHINE, INSBESONDERE EINER LASERBEARBEITUNGSMASCHINE**
METHOD FOR DISTRIBUTED CONTROL OF A MACHINING TOOL, IN PARTICULAR A LASER MACHINING TOOL
PROCÉDÉ DE COMMANDE DÉCENTRALISÉE D'UNE MACHINE DE TRAITEMENT, EN PARTICULIER D'UNE MACHINE DE TRAITEMENT LASER

(30) Priorität: 11.05.2006 DE 102006022304
(43) Veröffentlichungstag der Anmeldung: 28.01.2009
(73) Patentinhaber: Trumpf Laser- und Systemtechnik GmbH, 71254 Ditzingen (DE)
(72) Erfinder: BRAUCHLE, Thomas, 71229 Leonberg (DE)
(74) Vertreter: Maser, Jochen
(86) Internationale Anmeldenummer: PCT/EP2007/003900
(87) Internationale Veröffentlichungsnummer: WO 2007/131641

(56) Entgegenhaltungen:
- EP-A1- 0 786 841
- EP-A2- 0 901 865
- WO-A-01/37457
- DE-A1- 10 024 316
- DE-A1-102005 014 233
- GB-A- 2 117 928
- JP-A- 7 229 596
- JP-A- 11 047 950
- US-A- 6 061 605

## Beschreibung

Die Erfindung betrifft ein Verfahren zur dezentralen Steuerung einer Bearbeitungsmaschine, insbesondere einer Laserbearbeitungsmaschine, gemäß dem Oberbegriff des Anspruchs 1.

Eine solche Bearbeitungsmaschine, insbesondere Laserbearbeitungsmaschine, ist durch die Bearbeitungsmaschine Lasercell 1005 der Anmelderin bekannt. Eine solche Bearbeitungsmaschine weist einen Bearbeitungsraum auf, der von einem Schutzgehäuse umgeben ist. In dem Schutzgehäuse ist zumindest ein Zugangsbereich zum Bearbeitungsraum vorgesehen, der überwacht wird. Außerhalb des Schutzgehäuses ist ein Hauptbedienfeld angeordnet, welches die Steuerung der Bearbeitungsmaschine ermöglicht. Dieses Hauptbedienfeld umfasst eine Teachpanel, über welches sowohl Grundfunktionen als auch Hilfsfunktionen eingegeben werden können. Dezentral zum Hauptbedienfeld sind zum Öffnen und Schließen von Schutztüren einzelne Bedienelemente vorgesehen, welche entsprechend der Zuordnung der Bereiche einzelne Bedientasten umfassen. Beispielsweise ist an einer automatischen Schutztür eines Zugangsbereiches eine Bedientaste für das Öffnen der Tür, eine Bedientaste für das Schließen der Tür, eine Bedientaste für die Betätigung einer Beleuchtung in einem Schutzgehäuse, eine Bedientaste für eine Notausfunktion und eine Bedientaste zum Quittieren einer beladenen Werkstücktransportvorrichtung im Bearbeitungsraum außerhalb des Schutzgehäuses vorgesehen.

Solche Bearbeitungsmaschinen werden über Werkstücktransportvorrichtungen mit Werkstücken be- und entladen, die von dem Bearbeitungsraum durch einen separaten Zugangsbereich aus einem Beladeraum außerhalb der Bearbeitungsmaschine in den Bearbeitungsraum innerhalb des Schutzgehäuses gelangen. Diesem Zugangsbereich ist wiederum ein weiteres Bedienelement zugeordnet, welches abweichend von dem zuvor genannten Bedienelement andere Bedientasten umfasst.

Diese bekannten Bedienelemente ermöglichen sämtliche Funktionen zur Steuerung einer Bearbeitungsmaschine. Der Maschinenbediener muss jedoch für jeden erforderlichen Arbeitsschritt eine Bedientaste auswählen und jeweils ein Bedienelement am Ort des durchzuführenden Arbeitsschrittes betätigen. Diese Anordnung der Bedienelemente erfordert an jedem Bedienelemente eine spezifische Anweisung in Abhängigkeit des Zustandes der Bearbeitungsmaschine. Darüber hinaus muss der Maschinenbediener jeweils am Ort des Geschehens die einzelnen Bedienschritte einleiten.

Aus der WO 01/37457 A geht ein virtuelles Laserbediengerät für einen Laser für die Mikrolithographie hervor, welches ein Bedienfeld mit einer Vielzahl von Tasten aufweist. Dieses Bediengerät ist als tragbares Bedienelement ausgebildet, so dass der Bediener dieses Gerät mit sich tragen und entsprechend die Bearbeitungsmaschine ansteuern kann. Durch die einzelnen Tasten auf dem Bedienfeld können jeweils entsprechende Funktionen für die Ansteuerung des Lasers und dessen Überwachung angesteuert und abgefragt werden.

Aus der DE 100 24 316 A1 geht ein an einer Bearbeitungsmaschine einsetzbares Sicherheitsüberwachungsgerät hervor, welches elektrische Signale erfasst, die die räumliche Lage von Schutzhauben und Schutztüren der Bearbeitungsmaschine erfassen. Sobald die erfassten Signale nicht denen bei einer vollständig geschlossenen Schutzhaube oder Schutztüre entsprechen, wird der Antrieb der Bearbeitungsmaschine stillgesetzt.

Aus der JP 07 229596 A geht eine Bearbeitungsmaschine mit einem Schutzgehäuse hervor, bei welcher der Zugang in den Bearbeitungsraum überwacht wird. Hierfür ist vorgesehen, dass beim Öffnen einer Schutztür durch den Werker eine Ausgabe eines Warnsignals von einem Bedienfeld an einen Verschlussmechanismus einer Sicherheitsvorrichtung erfolgt. Anschließend entnimmt der Werker, der in das Schutzgehäuse eintritt, einen Schlüssel aus der Sicherheitsvorrichtung, und ein weiterer Werker erkennt, dass bereits ein Werker in dem Sicherheitsbereich ist. Aus der DE10 2005 014 233A geht ein Verfahren zum Betreiben einer automatisierten Produktionsanlage und eine Bedienvorrichtung zum Durchführen eines derartigen Verfahrens hervor. Die Bedienvorrichtung sieht einen einzigen zentralen Bedienrechner vor und eine Vielzahl von Bedienelementen, die jeweils mit einer Doppelfunktion zum Starten und zum Anhalten der Produktionsanlage versehen sind. Die Bedienelemente sind an jeder Schutztür vorgesehen.

Die Überwachung von Zugangsbereichen an Bearbeitungsmaschinen zusätzlich von deren Bearbeitungsräumen ist aus den oben genannten Druckschriften nicht bekannt, um beispielsweise ein automatisiertes Bestücken oder Entladen des Bearbeitungsraumes der Bearbeitungsmaschine zu überwachen. Zudem bedarf es bei diesen Bearbeitungsmaschinen einer zentralen Ansteuerung, insbesondere nach einer Betriebsunterbrechung.

Der Erfindung liegt die Aufgabe zugrunde, ein Verfahren zur dezentralen Steuerung einer Bearbeitungsmaschine zu schaffen, bei welchem eine Vereinfachung der Ansteuerung sowie eine Vereinheitlichung der Bedienelemente zur dezentralen Steuerung gegeben ist.

Diese Aufgabe wird erfindungsgemäß durch ein Verfahren zur dezentralen Steuerung einer Bearbeitungsmaschine gemäß den Merkmalen des Anspruchs 1 gelöst. Weitere vorteilhafte Ausgestaltungen und Weiterbildungen der Erfindung sind in den weiteren anhängigen Ansprüchen angegeben.

Das erfindungsgemäße Verfahren weist den Vorteil auf, dass zur dezentralen Steuerung einer Bearbeitungsmaschine ein einheitlicher Multifunktionstaster an dem oder den Zugangsbereichen der Bearbeitungsmaschine vorgesehen ist, so dass durch den Multifunktionstaster aufeinander folgende Arbeitsschritte einfach anzusteuern sind. Dabei ist vorgesehen, dass beim jeweiligen Betätigen des Multifunktionstasters ein Arbeitsschritt des Bedienablaufes für die Bearbeitungsmaschine angesteuert wird, der als nächster in einer sich wiederholenden Abfolge von aufeinanderfolgenden Arbeitsschritten des Bedienablaufes ansteht. Dadurch wird eine Kette von aufeinanderfolgenden Arbeitsschritten abgearbeitet. Darüber hinaus ist durch die einheitliche Ausgestaltung des Multifunktionstasters auch eine Ansteuerung eines Zugangsbereiches ermöglicht, der entfernt, jedoch in Sichtweite des Maschinenbedieners vorgesehen ist. Dadurch können verringerte Prozesszeiten aufgrund einer schnelleren Bedienung ermöglicht werden.

Zur einfachen und ergonomischen Bedienung einer solchen Bearbeitungsmaschine ist des Weiteren vorteilhafterweise vorgesehen, dass die einzelnen aufeinander folgenden Arbeitsschritte, welche dezentral durch einen oder mehrere Multifunktionstaster oder zentral am Hauptbedienfeld eingeleitet werden, miteinander synchronisiert werden, so dass an jedem Multifunktionstaster und am Hauptbedienfeld derselbe Schritt bei einer Anforderung angesteuert wird. Durch eine solche Synchronisation ist der Maschinenbediener frei in der Auswahl zur Betätigung eines von mehreren für die Bearbeitungsmaschine vorgesehenen Multifunktionstastern.

Bevorzugt ist vorgesehen, dass durch den Multifunktionstaster nacheinander die aufeinander folgenden Arbeitsschritte eines Bedienablaufes angesteuert werden, welcher für jede Betriebsart der Bearbeitungsmaschine festgelegt wird. Dadurch können die typischen oder regelmäßig wiederkehrenden Arbeitsschritte für jede Betriebsart einen spezifischen Bedienablauf bilden. Die Bearbeitungsmaschine wird bevorzugt in den Betriebsarten "Bearbeiten eines Werkstückes" und "Einrichten einer Bearbeitungsmaschine" über den Multifunktionstaster gesteuert.

In einer bevorzugten Ausführungsform des Verfahrens in der Betriebsart "Bearbeiten eines Werkstückes" wird ein Bearbeitungsprogramm durch Betätigen des Multifunktionstasters unterbrochen. Das Erkennen eines aktuellen Arbeitszustandes der Bearbeitungsmaschine während der Unterbrechung des Arbeitsprozesses und eine daraus resultierende Ansteuerung beziehungsweise Bedienung eines entsprechenden Bedienelementes durch den Maschinenbediener zur Rückkehr in den Arbeitsprozess und dessen Fortsetzung ist nicht mehr erforderlich.

Damit der Maschinenbediener über den aktuellen Zustand der Bearbeitungsmaschine im Bedienablauf informiert ist, wird durch den Multifunktionstaster bevorzugt in Abhängigkeit des aktuellen Arbeitszustands der Bearbeitungsmaschine ein Zustandssignal, wie beispielsweise ein Dauerlicht, ein Blinklicht oder mehrere Blinklichter mit verschiedenen Frequenzen oder ein Erlöschen des Dauerlichtes, ausgegeben. Dadurch kann der Maschinenbediener einen aktuellen Arbeitsschritt des Bedienablaufes oder den aktuellen Arbeitszustand der Bearbeitungsmaschine erkennen. Bevorzugt ist vorgesehen, dass der eine oder die mehreren Multifunktionstaster die Bearbeitung eines Werkstückes in der Betriebsart "Bearbeiten eines Werkstückes" durch ein erstes Zustandssignal anzeigen, wobei das erste Zustandssignal bevorzugt als Dauerlicht ausgebildet ist.

Nach einer vorteilhaften Ausgestaltung des erfindungsgemäßen Verfahrens ist vorgesehen, dass in der Betriebsart "Bearbeiten eines Werkstückes" durch Betätigen des Multifunktionstasters während der Bearbeitung des Werkstückes das Bearbeitungsprogramms unterbrochen wird und bevorzugt die Bearbeitungseinheit durch Abbremsen von Linearachsen angehalten, ein Laserstrahl ausgeschaltet und ein Vorschubhalt aktiviert werden.

Bevorzugt ist vorgesehen, dass die Unterbrechung des Bearbeitungsprogrammes am Multifunktionstaster durch eine Änderung des ersten Zustandssignals angezeigt wird. Dadurch kann der Maschinenbediener einen aktuellen Arbeitsschritt des Bedienablaufes oder den aktuellen Arbeitszustand der Bearbeitungsmaschine erkennen.

Da der Bearbeitungsraum der Bearbeitungsmaschine aus Sicherheitsgründen in der Regel abgesichert ist, ist bevorzugt vorgesehen, dass beim Betätigen des Multifunktionstasters zusätzlich zur Unterbrechung des Bearbeitungsprogramms der Bearbeitungsraum zugänglich gemacht wird. Bei manuellen Schutztüren wird am Schutzgehäuse eine Verriegelung an den Schutztüren entriegelt oder bei automatischen Schutztüren am Schutzgehäuse die Schutztüren geöffnet oder bei einer Überwachung des Zuggangsbereiches, beispielsweise durch Lichtschranken, die Überwachung deaktiviert. Diese Arbeitsschritte werden nacheinander vollzogen und stellen einen Bedienablauf dar, um den Bearbeitungsraum einer Bearbeitungsmaschine zugänglich zu machen, und die Ursache für die eingeleitete Unterbrechung zu überprüfen.

In einer vorteilhaften Ausgestaltung des Verfahrens ist der Zugangsbereich der Bearbeitungsmaschine durch automatische Schutztüren oder eine Überwachung durch Lichtschranken oder einen Lichtvorhang abgesichert. Eine Unterbrechung des Bearbeitungsprogramms und die Zugänglichkeit zum Bearbeitungsraum wird dem Maschinenbediener bevorzugt durch ein Erlöschen des ersten Zustandssignal, vorzugsweise des Dauerlichtes, am Multifunktionstaster angezeigt. Dadurch wird der Maschinenbediener darüber informiert, dass die aufeinanderfolgenden Arbeitsschritte zur Unterbrechung des Bearbeitungsprogramms durchlaufen sind und der Bearbeitungsraum gefahrlos zugänglich ist.

Nachdem die Ursache für die Unterbrechung des Bearbeitungsprogramms überprüft und ausgeräumt wurde, ist bevorzugt vorgesehen, dass durch das Betätigen des Multifunktionstasters ein Arbeitsschritt eingeleitet wird, um zum unterbrochenen Bearbeitungsprogramm zurückzukehren, wobei ein automatisches Schließen der automatischen Schutztüren oder ein Verriegeln der manuellen Schutztüren oder ein Aktivieren der Überwachung des Zugangsbereiches angesteuert wird.

Dieser erfolgreich durchgeführte Arbeitsschritt wird vorteilhafterweise durch ein zweites Zustandssignal, das bevorzugt als Blinklicht ausgebildet ist, am Multifunktionstaster angezeigt. Dadurch wird gleichzeitig eine Überprüfung für den vollständig vollzogenen Arbeitsschritt sichergestellt.

In einer vorteilhaften Ausgestaltung des Verfahrens ist der Zugangsbereich der Bearbeitungsmaschine durch manuelle Schutztüren abgesichert. Die Unterbrechung des Bearbeitungsprogramms und das Entriegeln der manuellen Schutztüren werden bevorzugt durch ein zweites Zustandssignals des Multifunktionstasters, insbesondere ein Blinklicht, angezeigt. Das zweite Zustandssignal des Multifunktionstasters erlischt beim Öffnen wenigstens einer manuellen Schutztür, so dass der Maschinenbediener weiß, dass der Bearbeitungsraum zugänglich ist.

Zur Fortsetzung des Bearbeitungsprogramms wird die wenigstens eine geöffnete manuelle Schutztür geschlossen und anschließend werden die manuellen Schutztüren durch Betätigen des Multifunktionstasters verriegelt.

Der Multifunktionstaster zeigt das Verriegeln der manuellen Schutztüren durch das zweite Zustandssignal, insbesondere das Blinklicht, an. Dadurch kann der Maschinenbediener einen aktuellen Arbeitsschritt des Bedienablaufes oder den aktuellen Arbeitszustand der Bearbeitungsmaschine erkennen.

Nachdem ein Blinklicht am Multifunktionstaster angezeigt wird, erfolgt vorteilhafterweise durch nochmaliges Betätigen des Multifunktionstasters die Aktivierung der Bearbeitungsmaschine, indem das Bearbeitungsprogramm fortgesetzt wird. Das Bearbeitungsprogramm führt seine weitere Bearbeitung an der Stelle fort, an welcher die Unterbrechung des Bearbeitungsprogrammes eingeleitet wurde.

Von dem Zeitpunkt an, in welchem die Fortsetzung des Bearbeitungsprogramms eingeleitet wurde, wird bevorzugt das Blinklicht des Multifunktionstasters in ein Dauerlicht übergeführt. Dadurch wird angezeigt, dass das Bearbeitungsprogramm routinemäßig abgearbeitet wird.

Nachdem ein oder mehrere in dem Bearbeitungsraum positionierte Werkstücke vollständig bearbeitet sind, ist ein Werkstückwechsel erforderlich. Dieser Werkstückwechsel ist ein Bearbeitungsschritt innerhalb des Bearbeitungsprogramms der Betriebsart "Bearbeiten des Werkstücks" oder kann vom Maschinenbediener manuell durchgeführt werden.

Nach einer bevorzugten Ausgestaltung des Verfahrens ist vorgesehen, dass der Werkstückwechsel im Bearbeitungsraum am Multifunktionstaster durch eine Änderung des ersten Zustandssignals, bevorzugt ein Erlöschen des Dauerlichtes, angezeigt wird. Dadurch ist der Maschinenbediener wieder über den aktuellen Status in Kenntnis gesetzt.

Das Be- und Entladen von Werkstücken erfolgt vorzugsweise über eine Werkstücktransportvorrichtung. Der Werkstückwechsel erfolgt dadurch, dass zumindest ein Zugangsbereich der Bearbeitungsmaschine freigegeben wird, so dass die Werkstücktransportvorrichtung von einem Beladeraum in den Bearbeitungsraum verfahren wird. Sofern zwei Beladeräume vorgesehen sind, wird beispielsweise eine Werkstücktransportvorrichtung von dem Bearbeitungsraum in einen ersten Beladeraum und eine Werkstücktransportvorrichtung von einem zweiten Beladeraum in den Bearbeitungsraum verfahren. Nach dem Verfahren der Werkstücktransportvorrichtung wird der Zugangsbereich aktiviert. Im Anschluss kann eine erneute Bearbeitung der noch unbearbeiteten Werkstücke durchgeführt werden.

Vorzugsweise kann während des Werkstückwechsels durch Betätigen des Multifunktionstasters die wenigstens eine Werkstücktransportvorrichtung angehalten und durch nochmaliges Betätigen des Multifunktionstasters wieder in Gang gesetzt werden.

Des Weiteren ist vorteilhafterweise vorgesehen, dass in der Betriebsart "Einrichten einer Bearbeitungsmaschine" durch Betätigen des Multifunktionstasters die Arbeitsschritte Verfahren der Werkstückträgervorrichtung aus dem Beladeraum in den Bearbeitungsraum oder Verfahren aus dem Bearbeitungsraum in den Beladeraum gesteuert werden.

Bevorzugt ist vorgesehen, dass als zusätzliche Arbeitsschritte ein Öffnen und Schließen des Zugangsbereiches durch Betätigen des Multifunktionstasters gesteuert werden. Dadurch sind aufeinander folgende Arbeitsschritte für den Bedienablauf vorgesehen, die ermöglichen, dass eine gute Zugänglichkeit des Maschinenbedieners in den Bearbeitungsraum zum Einrichten der Bearbeitungsmaschine gegeben ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht eines dezentralen Bedienelementes,
- Figur 2: eine perspektivische Ansicht einer Bearbeitungsmaschine mit einem Schutzgehäuse und manuellen Schutztüren,
- Figur 3: eine perspektivische Ansicht einer Bearbeitungsmaschine mit automatischen Schutztüren und einem Palettenwechsler als Werkstücktransportvorrichtung und
- Figur 4: eine perspektivische Ansicht einer Bearbeitungsmaschine mit einem Rotationswechsler als Werkstücktransportvorrichtung.

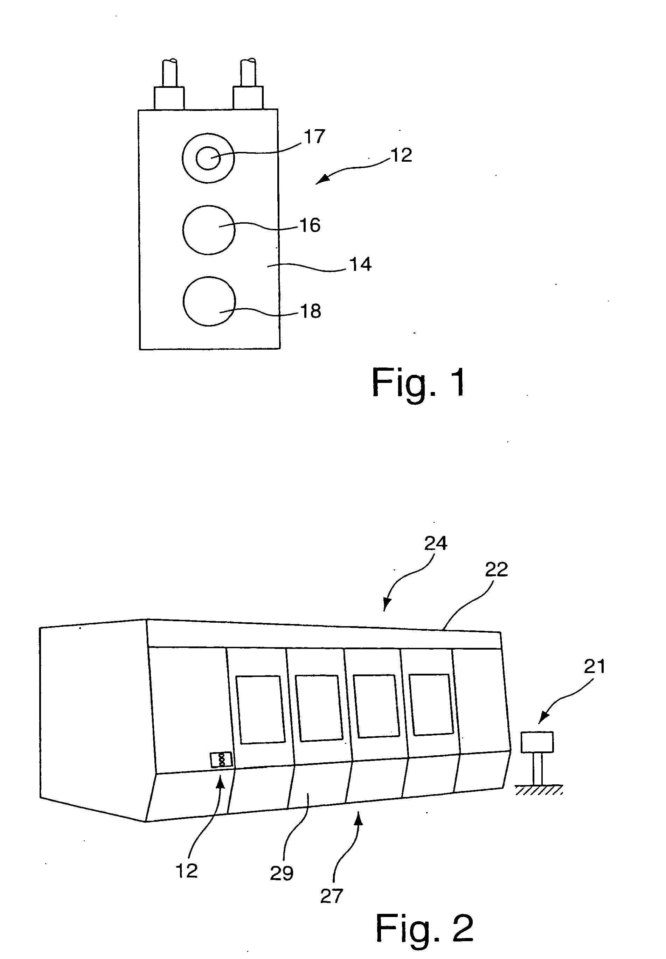

In Figur 1 ist eine schematische Ansicht auf ein Bedienelement 12 dargestellt, welches ein Gehäuse oder zumindest eine Montageplatte 14 umfasst. In dieser Montageplatte 14 sind ein Multifunktionstaster 16, ein Notausschalter 17 und ein Quittiertaster 18 vorgesehen. Diese drei Taster 16, 17, 18 sind bevorzugt farblich unterschiedlich ausgestaltet. Der Notausschalter 17 ist als roter Schalter mit gelbem Hintergrund, der Quittiertaster 18 als grüner Taster und der Multifunktionstaster 16 als blauer Leuchtdrucktaster ausgebildet.

In Figur 2 ist eine Bearbeitungsmaschine 24 mit einem Schutzgehäuse 22 dargestellt, wobei das Schutzgehäuse 22 über einen Zugangsbereich 27 zugänglich ist. Der Zugangsbereich 27 ist durch manuell verschiebbare Schutztüren 29 ausgebildet, die in Figur 2 in geschlossenem Zustand abgebildet sind. Ein Bedienelement 12 ist dezentral zu einem Hauptbedienfeld 21 am Schutzgehäuse 22 der Bearbeitungsmaschine 24 angeordnet. Sofern das Bedienelement 12 als Einbauteil vorgesehen ist, umfasst dies eine Montageplatte 14, welche bündig zum Schutzgehäuse 22 angebracht wird. Alternativ kann auch ein Gehäuse vorgesehen sein, welches an dem Schutzgehäuse 22 befestigt ist.

In der einfachsten Ausführungsform einer Bearbeitungsmaschine 24 kann vorgesehen sein, dass dem Zugangsbereich 27 lediglich ein Bedienelement 12 zugeordnet ist. Bei einer solchen Ausführungsform sind die Schutztüren 29 manuell zum Öffnen und Schließen ausgebildet. Das Ent- und Verriegeln der Schutztüren 29 erfolgt jedoch automatisch und wird überwacht.

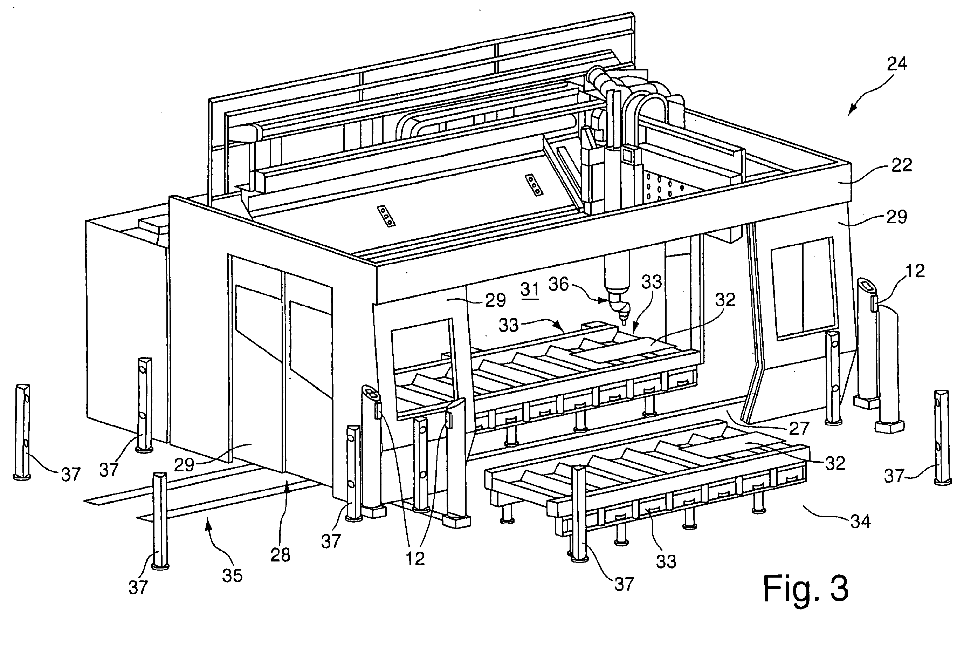

Das erfindungsgemäße Verfahren zur dezentralen Steuerung der Bearbeitungsmaschine wird nachfolgend anhand einer Bearbeitungsmaschine gemäß Figur 3 näher beschrieben.

Figur 3 zeigt eine Bearbeitungsmaschine 24 mit automatischen Schutztüren 29 und einer Automatisierung der Be- und Entladevorgänge der Werkstücke. Die Bearbeitungsmaschine 24 ist als Laserbearbeitungsmaschine ausgebildet und umfasst einen Bearbeitungsraum 31, der vom Schutzgehäuse 22 umgeben ist. Der Zugangsbereich 27 ist durch zwei automatisch verfahrbare Schutztüren 29 ausgebildet, die in Figur 3 in geöffnetem Zustand abgebildet sind. Jeder automatisch verfahrbaren Schutztür 29 ist ein Bedienelement 12 mit einem Multifunktionstaster 16 zugeordnet. Die Bedienelemente 12 sind in Stehsäulen 30 integriert, die vor den Schutztüren 29 angeordnet sind.

Im Bearbeitungsraum 31 ist eine Werkstücktransportvorrichtung 33 positioniert, die als Palettenwechsler zur Automatisierung der Be- und Entladevorgänge der Werkstücke ausgebildet ist. Die Werkstücktransportvorrichtung 33 stellt einen Arbeitstisch zur Aufnahme der Werkstücke dar, wobei der Arbeitstisch auf Knopfdruck zwischen einer Be- und Entladeposition außerhalb des Schutzgehäuses 22 und einer Bearbeitungsposition innerhalb des Schutzgehäuses 22 verfahren wird. Die Bearbeitungsmaschine 24 umfasst einen ersten Beladeraum 34, der an einer Vorderseite des Schutzgehäuses 22 angeordnet ist, und einen zweiten Beladeraum 35, der an einer Seite des Schutzgehäuses 22 angeordnet ist. Diese Anordnung ermöglicht, dass ein Maschinenbediener im Beladeraum 34, 35 ein fertig bearbeitetes Werkstück entlädt und die Werkstücktransportvorrichtung 33 mit einem unbearbeiteten Werkstück belädt, während im Bearbeitungsraum 31 eine Bearbeitung des Werkstückes 32 erfolgt.

In Abhängigkeit der Größe und der Flexibilität der Bearbeitungsmaschine 24 können ein oder mehrere Beladeräume 34, 35 vorgesehen sein. Die Beladeräume 34, 35 sind durch eine Lichtschranke gesichert, wobei die Beladeräume 34, 35 durch vier Säulen 37 begrenzt sind, in die die Lichtschranken integriert sind. Die Aktivierung der Lichtschranken erfolgt über den Quittiertaster 18 des Bedienelementes 12. Alternativ können die Beladeräume 34, 35 durch einen Lichtvorhang gesichert sein.

Im Bearbeitungsraum 31 ist als Bearbeitungseinheit 36 beispielsweise ein Laserschneidkopf oder ein Laserschweißkopf vorgesehen, der über ein Linearachsensystem oberhalb der Werkstücktransportvorrichtung 33 verfahrbar ist.

Eine Bearbeitungsmaschine kann in verschiedenen Betriebsarten betrieben werden. Dazu gehören beispielsweise die Betriebsarten "Bearbeiten eines Werkstückes", "Einrichten einer Bearbeitungsmaschine", "Wartung einer Bearbeitungsmaschine" und "Diagnose".

Die Bearbeitung eines Werkstückes gemäß einem Bearbeitungsprogramm erfolgt in der Betriebsart "Bearbeiten eines Werkstückes". Der Maschinenbediener programmiert das Bearbeitungsprogramm, das bei Start Befehle an die Maschinensteuerung abgibt. In der Betriebsart "Bearbeiten eines Werkstückes" erfolgen viele Befehle automatisch gemäß dem ausgewählten Bearbeitungsprogramm. Die Funktion des Multifunktionstasters 16 besteht darin, dass das Bearbeitungsprogramm sicher unterbrochen werden kann und die Steuerung der Unterbrechung über den Multifunktionstaster 16 erfolgen kann.

In der Betriebsart "Einrichten einer Bearbeitungsmaschine" kann der Maschinenbediener die Bearbeitungsmaschine für eine Bearbeitung einrichten. Dazu gehören Tätigkeiten, wie beispielsweise Justieren eines Laserstrahles, Einstellen einer Abstandsregelung oder Einbringen einer Werkstückauflage.

Die Bearbeitung von Werkstücken erfolgt in der Betriebsart "Bearbeiten eines Werkstückes". Zur Bearbeitung des Werkstückes 32, das sich im Bearbeitungsraum 31 befindet, wird das Bearbeitungsprogramm über das Hauptbedienfeld 21 gestartet. Der Multifunktionstaster 16 zeigt über ein Dauerlicht an, dass die Bearbeitungseinheit 36 aktiviert ist und das Bearbeitungsprogramm abgearbeitet wird.

Ein leuchtender Quittiertaster 18 zeigt dem Maschinenbediener an, dass an der Werkstücktransportvorrichtung 33, die im Beladeraum 34 positioniert ist, ein Werkstückwechsel erforderlich ist. Während der Bearbeitung des Werkstückes 32 im Bearbeitungsraum 31 führt der Maschinenbediener im Beladeraum 34 einen Wechsel des Werkstückes durch, ein fertig bearbeitetes Werkstück wird der Werkstücktransportvorrichtung 33 entnommen und ein neues, unbearbeitetes Werkstück wird in die Werkstücktransportvorrichtung 33 eingelegt. Durch Drücken des Quittiertasters 18 bestätigt der Maschinenbediener den Werkstückwechsel im Beladeraum 34.

Nachdem das Werkstück 32 bearbeitet wurde, wird die Bearbeitungseinheit 36 angehalten und das Bearbeitungsprogramm beendet. Über die Steuerung der Bearbeitungsmaschine 24 erfolgt ein Wechsel der Werkstücktransportvorrichtung 33. Die Zugangsbereiche 27, 28 werden geöffnet, die Werkstücktransportvorrichtung 33 wird aus dem Bearbeitungsraum 31 in den Beladeraum 35 verfahren und die Werkstücktransportvorrichtung 33 wird aus dem Beladeraum 34 in den Bearbeitungsraum 31 verfahren. Anschließend werden die Schutztüren 29 geschlossen, so dass die Zugangsbereiche 27, 28 verschlossen sind, und die Bearbeitungseinheit 36 beginnt mit der Bearbeitung des nächsten Werkstückes durch Start des Bearbeitungsprogrammes.

Die Unterbrechung der Bearbeitung zum Werkstückwechsel zeigt der Multifunktionstaster 16 dadurch an, dass das Dauerlicht erlischt. Sobald das Bearbeitungsprogramm nach erfolgtem Werkstückwechsel fortgesetzt wird, zeigt der Multifunktionstaster 16 wieder ein Dauerlicht an.

Sollte während der Bearbeitung des Werkstückes 32 ein Zugang in den Bearbeitungsraum 31 erforderlich werden, kann das Bearbeitungsprogramm durch Betätigen des Multifunktionstasters 16 unterbrochen werden. Über den Multifunktionstaster 16 können nacheinander folgende Arbeitsschritte eines Bedienablaufes angesteuert werden, die zu einem sicheren Unterbrechen der Bearbeitung des Werkstückes 32 und einem anschließenden Fortsetzen der Bearbeitung erforderlich sind.

Durch Betätigen des Multifunktionstasters 16 wird die Bearbeitungseinheit 36 durch Abbremsen der Linearachsen angehalten, ein Laserstrahl ausgeschaltet und ein Vorschubhalt aktiviert. Außerdem wird die Schutztür 29, die dem betätigten Multifunktionstaster 16 zugeordnet ist, geöffnet. Der Maschinenbediener kann den Bearbeitungsraum 31 betreten und die Störung beseitigen. Nach Beseitigung der Störung kann die offene Schutztür 29 durch Betätigen des Multifunktionstasters 16 geschlossen werden. Ein weiteres Betätigen des Multifunktionstasters 16 setzt das Bearbeitungsprogramm an der Stelle fort, an welcher das Bearbeitungsprogramm zuvor unterbrochen wurde.

Der Multifunktionstaster 16 zeigt die verschiedenen Zustände der Bearbeitungsmaschine 24 während der Unterbrechung durch unterschiedliche Zustandssignale an. Die Unterbrechung des Bearbeitungsprogrammes und das Öffnen der Schutztür 29 werden dadurch angezeigt, dass das Dauerlicht des Multifunktionstasters 16 erlischt. Nach Beseitigung der Störung und dem Schließen der Schutztür 29 zeigt der Multifunktionstaster 16 ein Blinklicht an, dass dem Maschinenbediener signalisiert, dass zur Fortsetzung der Bearbeitung eine weitere Handlung erforderlich ist. Durch nochmaliges Drücken des Multifunktionstasters 16 wird die Bearbeitungseinheit 36 aktiviert und das Bearbeitungsprogramm fortgesetzt, der Multifunktionstaster 16 geht von dem Blinklicht in ein Dauerlicht über.

Bei einem Schutzgehäuse 22 der Bearbeitungsmaschine 24 mit manuell zu öffnenden Schutztüren 29 kann nach einer Unterbrechung des Bearbeitungsprogramms durch Betätigen des Multifunktionstasters 16 ein Stillsetzen der Bearbeitungseinheit 36 und ein Entriegeln der Schutztüren 29 durch ein Wechsel eines Dauerlichtes in ein Blinklicht am Multifunktionstaster 16 angezeigt werden. Dem Maschinenbediener wird dadurch angezeigt, dass der Bearbeitungsraum 31 zugänglich ist.

In der Betriebsart "Einrichten einer Bearbeitungsmaschine" ist auf dem Multifunktionstaster 16 eine andere Abfolge von sich wiederholenden Arbeitsschritten hinterlegt.

Die Werkstücktransportvorrichtung 33 kann im Beladeraum 34, 35 oder im Bearbeitungsraum 31 positioniert sein.

Durch Betätigen des Multifunktionstasters 16 werden die Schutztüren 29 geöffnet, durch ein weiteres Betätigen wird die Werkstücktransportvorrichtung 33 aus dem Beladeraum 34, 35 in den Bearbeitungsraum 31 oder aus dem Bearbeitungsraum 31 in den Beladeraum 34, 35 verfahren und durch ein weiteres Betätigen werden die Schutztüren 29 wieder geschlossen.

Somit wird offensichtlich, dass lediglich durch Betätigen des Multifunktionstasters 16 ein Bedienablauf von aufeinanderfolgenden Arbeitsschritten eingeleitet wird, der eine typische Abfolge von aufeinanderfolgenden Arbeitsschritten umfasst, wobei eine Fehlbedienung ausgeschlossen ist. Dabei kann sowohl die Art und Anzahl der Arbeitsschritte von der Unterbrechung des Arbeitsprozesses bis zum Stillsetzen der Bearbeitungsmaschine als auch die Art und Anzahl der Arbeitschritte für das Fortsetzen des unterbrochenen Arbeitsprozesses gegenüber den Ausführungsbeispielen verändert, erhöht und auch voneinander abweichend ausgestaltet sein.

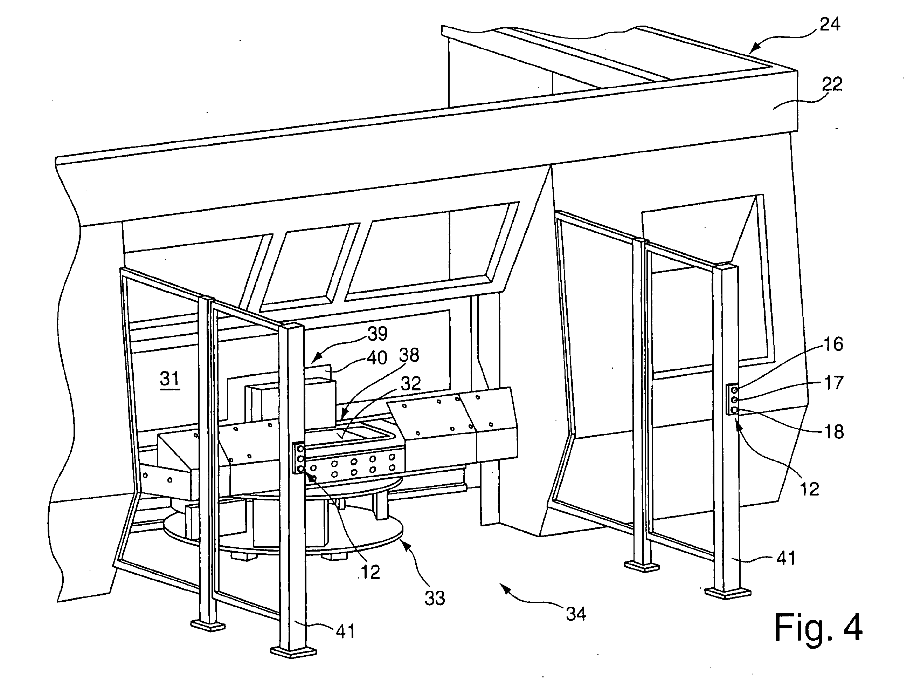

In Figur 4 ist eine Bearbeitungsmaschine 24 in Analogie zu Figur 3 dargestellt, welche sich dadurch unterscheidet, dass die Werkstücktransportvorrichtung 33 anstelle eines Palettenwechslers durch einen Rotationswechsler ausgebildet ist. Ein solcher Rotationswechsler weist zwei oder mehrere Stationen auf, in denen die Werkstücke positioniert sind. Figur 4 zeigt als Werkstücktransportvorrichtung 33 einen Rotationswechsler mit zwei Stationen, einer Be- und Entladestation 38 und einer Bearbeitungsstation 39. Die Be- und Entladestation 38 wird durch eine Schutzwand 40 von der Bearbeitungsstation 39 getrennt. Das fertig bearbeitete Werkstück wird aus der Bearbeitungsstation 39 in die Be- und Entladestation 38 gedreht und kann in der Be- und Entladestation 38 entladen werden. Die Be- und Entladestation 38 wird mit einem unbearbeiteten Werkstück beladen. Anschließend wird der erfolgte Werkstückwechsel in der Be- und Entladestation 38 an der Stehsäule 41 sowie das Verlassen des Zugangsbereichs 27 durch den Quittiertaster 18 bestätigt. Alternativ kann für den erfolgten Werkstückwechsel und das Verlassen der Be- und Entladestation 38 jeweils eine Bestätigung angefordert werden. Der Zugangbereich 27 wird aktiviert und ein Bearbeitungsprogramm gestartet.

Die Ansteuerung einer solchen Werkstücktransportvorrichtung 33 entspricht prinzipiell der zu Figur 3 beschriebenen Steuerung. Anstelle eines Verfahrens des Palettenwechslers in und aus dem Beladeraum 34, 35 erfolgt eine Drehbewegung des Rotationswechslers, um einen Weitertransport der Werkstücke von der Be- und Entladestation 38 zur nachfolgenden Bearbeitungsstation 39 zu ermöglichen.

Alternativ zu den in Figur 3 dargestellten Zugangsbereichen 27, 28 die durch Schutztüren 29 verschlossen werden, ist in Figur 4 ein Zugangsbereich 27 geschaffen, der über eine Lichtschranke gesichert wird. Diese Lichtschranke oder ein Lichtvorhang ist in Stehsäulen 41 integriert, die ebenfalls Bedienelemente 12 aufnehmen und Teil des Schutzgehäuses 22 sind.

Aufgrund der Synchronisation des Hauptbedienfeldes 21 mit einem oder mehreren dezentral zum Hauptbedienfeld 21 vorgesehenen Bedienelementen 12 kann die Ansteuerung sowohl an dem Hauptbedienfeld 21 als auch an den Bedienelementen 12 erfolgen.

Die Bedienelemente 12 zur dezentralen Ansteuerung können am Schutzgehäuse 22 oder an separaten Säulen 37, 41 vorgesehen sein. Des Weiteren ist ermöglicht, dass ein solches Bedienelement 12 als autarkes mobiles Funkgerät ausgebildet ist, welches der Maschinenbediener mit sich führt, so dass dieser unabhängig von seinem Standort zur Bearbeitungsmaschine 24 eine Ansteuerung durchführen kann.

Eine Bearbeitungsmaschine ist standardmäßig mit einem bestimmten Verfahren zur dezentralen Steuerung ausgerüstet, das über den Multifunktionstaster 16 in den Betriebsarten "Bearbeiten eines Werkstückes" und "Einrichten einer Bearbeitungsmaschine" aufgerufen werden kann. Auf Wunsch eines Kunden kann der Multifunktionstaster 16 auch mit einer individuellen Abfolge von Arbeitsschritten programmiert werden.

Alle vorbeschriebenen Merkmale sind jeweils für sich erfindungswesentlich und können beliebig miteinander kombiniert werden.

## Patentansprüche

1. Verfahren zur Steuerung einer Bearbeitungsmaschine (24), insbesondere einer Laserbearbeitungsmaschine, welche einen Bearbeitungsraum (31) umfasst, der von einem Schutzgehäuse (22) umgeben ist, wenigstens einen Zugangsbereich (27, 28) aufweist, der überwacht wird, und die zumindest zum Start der Bearbeitungsmaschine (24) von einem Hauptbedienfeld (21) bedient wird, wobei ein oder mehrere dezentral zum Hauptbedienfeld (21) angeordneten Bedienelemente (12) vorgesehen sind, die jeweils mit einem Multifunktionstaster (16) ausgestattet sind, wobei zumindest ein Bedienelement (12) dem wenigstens einen Zugangsbereich (27, 28) zugeordnet ist,
**dadurch gekennzeichnet, dass**:
- beim jeweiligen Betätigen des Multifunktionstasters (16) ein Arbeitsschritt eines Bedienablaufes angesteuert wird, der als nächster in einer sich wiederholenden Abfolge von aufeinanderfolgenden Arbeitsschritten des Bedienablaufs ansteht,
- die Bearbeitungsmaschine (24) entweder zentral am Hauptbedienfeld (21) oder mit dem einen oder mehreren dezentral zum Hauptbedienfeld angeordneten Bedienelementen (12) mittels des Multifunktionstasters (16) gesteuert wird, und
- die einzelnen aufeinander folgenden Arbeitsschritte, welche entweder dezentral durch den einen oder die mehrere Multifunktionstastern (16) oder zentral am Hauptbedienfeld (21) eingeleitet werden, miteinander synchronisiert werden, so dass an jedem Multifunktionstaster (16) und dem Hauptbedienfeld (21) derselbe nachfolgende Arbeitsschritt des Bedienablaufs bei Anforderung angesteuert werden kann.

2. Verfahren nach Anspruch 1, **dadurch gekennzeichnet, dass** die Bearbeitungsmaschine (24) durch wenigstens eine Betriebsart, insbesondere "Bearbeiten eines Werkstückes" oder "Einrichten einer Bearbeitungsmaschine", betrieben wird und für jede Betriebsart eine vorbestimmte Abfolge von aufeinander folgenden Arbeitsschritten für den Bedienablauf hinterlegt wird, die durch den Multifunktionstaster (16) angesteuert wird.

3. Verfahren nach Anspruch 2, **dadurch gekennzeichnet, dass** in der Betriebsart "Bearbeiten eines Werkstückes" bei Betätigen des Multifunktionstasters (16) die Bearbeitung des Werkstückes unterbrochen wird.

4. Verfahren nach Anspruch 2 oder 3, **dadurch gekennzeichnet, dass** in der Betriebsart "Bearbeiten eines Werkstückes" der eine oder die mehreren Multifunktionstaster (16) die Bearbeitung eines Werkstückes (32) durch ein erstes Zustandssignal, insbesondere ein Dauerlicht, anzeigen.

5. Verfahren nach Anspruch 2 bis 4, **dadurch gekennzeichnet, dass** in einer Betriebsart "Bearbeiten eines Werkstückes" die Bearbeitung des Werkstückes (32) entsprechend einem Bearbeitungsprogramm durch Betätigen des Multifunktionstasters (16) unterbrochen wird und dass vorzugsweise die Unterbrechung der Bearbeitung in der Betriebsart "Bearbeiten eines Werkstückes" durch eine Änderung des ersten Zustandssignals des Multifunktionstasters (16), insbesondere des Dauerlichts, angezeigt wird.

6. Verfahren nach Anspruch 5, **dadurch gekennzeichnet, dass** zusätzlich zur Unterbrechung der Bearbeitung bei manuellen Schutztüren (29) eine Verriegelung der Schutztüren (29) entriegelt wird oder bei automatischen Schutztüren (29) mindestens eine Schutztüre (29) geöffnet wird oder eine Überwachung des wenigstens einen Zugangsbereiches (27, 28) deaktiviert wird und dass vorzugsweise die Unterbrechung des Bearbeitungsprogramms und das Öffnen der automatischen Schutztüren (29) oder das Deaktivieren des wenigstens einen Zugangsbereiches (27, 28) durch ein Erlöschen des ersten Zustandssignals des Multifunktionstasters (16), insbesondere des Dauerlichts, angezeigt werden.

7. Verfahren nach Anspruch 6, **dadurch gekennzeichnet, dass** zur Fortführung des unterbrochenen Bearbeitungsprogramms der Multifunktionstaster (16) betätigt wird, wodurch ein Schließen der automatischen Schutztüren (29) oder ein Aktivieren des wenigstens einen Zugangsbereiches (27, 28) erfolgt und dass vorzugsweise der Multifunktionstaster (16) das Schließen der automatischen Schutztüren (29) oder das Aktivieren des wenigstens einen Zugangsbereiches (27, 28) durch das zweite Zustandssignal, insbesondere das Blinklicht, anzeigt.

8. Verfahren nach Anspruch 5, **dadurch gekennzeichnet, dass** die Unterbrechung des Bearbeitungsprogramms und das Entriegeln der manuellen Schutztüren (29) durch ein zweites Zustandssignals des Multifunktionstasters (16), insbesondere ein Blinklicht, angezeigt werden und das zweite Zustandssignal des Multifunktionstasters (16) beim Öffnen wenigstens einer manuellen Schutztüre (29) erlischt.

9. Verfahren nach Anspruch 8, **dadurch gekennzeichnet, dass** zur Fortsetzung des Bearbeitungsprogramms die wenigstens eine geöffnete manuelle Schutztüre (29) geschlossen wird und die manuellen Schutztüren (29) anschließend durch Betätigen des Multifunktionstasters (16) verriegelt werden und dass vorzugsweise der Multifunktionstaster (16) das Verriegeln der manuellen Schutztüren (29) durch das zweite Zustandssignal, insbesondere das Blinklicht, anzeigt.

10. Verfahren nach Anspruch 7 oder 9, **dadurch gekennzeichnet, dass** durch nochmaliges Betätigen des Multifunktionstasters (16) das unterbrochene Bearbeitungsprogramm fortgesetzt wird und dass vorzugsweise die Fortsetzung des Bearbeitungsprogramms durch einen Wechsel des Multifunktionstasters (16) vom zweiten Zustandssignal in das erste Zustandssignal, insbesondere vom Blinklicht in das Dauerlicht, angezeigt wird.

11. Verfahren nach einem der vorhergehenden Ansprüche, **dadurch gekennzeichnet, dass** eine Unterbrechung eines Bearbeitungsprogramms für einen Werkstückwechsel am Multifunktionstaster (16) durch eine Änderung, vorzugsweise ein Erlöschen, des ersten Zustandssignals, insbesondere des Dauerlichtes, angezeigt wird.

12. Verfahren nach einem der vorhergehenden Ansprüche, **dadurch gekennzeichnet, dass** ein Be- und Entladen von Werkstücken aus einem Beladeraum (34, 35) in den Bearbeitungsraum (31) mittels wenigstens einer Werkstücktransportvorrichtung (33) erfolgt und dass vorzugsweise durch Betätigen des Multifunktionstasters (16) während des Werkstückwechsels die wenigstens eine Werkstücktransportvorrichtung (33) angehalten und durch nochmaliges Betätigen des Multifunktionstasters (16) wieder in Gang gesetzt wird.

13. Verfahren nach Anspruch 2, **dadurch gekennzeichnet, dass** in der Betriebsart "Einrichten einer Bearbeitungsmaschine" durch Betätigen des Multifunktionstasters (16) die Arbeitsschritte Werkstücktransportvorrichtung (33) aus einem Beladeraum (34, 35) in den Bearbeitungsraum (31) oder aus dem Bearbeitungsraum (31) in den Beladeraum (34, 35) verfahren angesteuert werden.

14. Verfahren nach Anspruch 13, **dadurch gekennzeichnet, dass** als zusätzlicher Arbeitsschritt ein Öffnen oder Schließen des Zugangsbereiches (27, 28) durch Betätigen des Multifunktionstasters (16) gesteuert werden.

## Claims

1. A method for the control of a machine tool (24), particularly a laser machine tool, which comprises a machining compartment (31) which is surrounded by a protective housing (22) and has at least one access region (27, 28) which is monitored, and which is operated from a main control panel (21) at least to start the machine tool (24), wherein
- one or more control elements (12) are provided decentralized to the main control panel (21), each control element (12) comprises a multifunction pushbutton (16), wherein at least one control element (12) is associated with the at least one access region (27, 28), **characterized in that**
- the respective operation of the multifunction pushbutton (16) involves a work step in a control cycle being actuated which is next in line in a repetitive sequence of consecutive work steps in the control cycle,
- the machine tool (24) is controlled centralized on the main control panel (21) or decentralized to the main control panel (21) by one or more control elements (12) with the multifunction pushbutton (16) and
- the individual consecutive work steps, which are initiated in decentralized fashion by one or more multifunction pushbuttons (16) or centrally on the main control panel (21), are synchronized to one another, so that the same successive work step in the control cycle is actuated on each multifunction pushbutton (16) and the main control panel (21) upon request.

2. The method as claimed in claim 1, **characterized in that** the machine tool (24) is operated by at least one mode of operation, particularly "machining a workpiece" or "setting up a machine tool", and for each mode of operation a predetermined sequence of consecutive work steps is stored for the control cycle, said sequence being actuated by the multifunction pushbutton (16).

3. The method as claimed in claim 2, **characterized in that** in the "machining a workpiece" mode of operation the machining of the workpiece is interrupted when the multifunction pushbutton (16) is operated.

4. The method as claimed in claim 2 or 3, **characterized in that** in the "machining a workpiece" mode of operation the one or more multifunction pushbutton(s) (16) indicate(s) that a workpiece (32) is being machined by means of a first state signal, particularly a steady light.

5. The method as claimed in claims 2 to 4, **characterized in that** in a "machining a workpiece" mode of operation the machining of the workpiece (32) in line with a machining program is interrupted by operating the multifunction pushbutton (16) and that preferably the interruption of the machining in the "machining a workpiece" mode of operation is indicated by a change in the first state signal from the multifunction pushbutton (16), particularly the steady light.

6. The method as claimed in claim 5, **characterized in that** in addition to the interruption of the machining, with manual protective doors (29) a lock on the protective doors (29) is unlocked or with automatic protective doors (29) at least one protective door (29) is opened or monitoring of the at least one access region (27, 28) is deactivated, and preferably the interruption of the machining program and the opening of the automatic protective doors (29) or the deactivation of the at least one access region (27, 28) are indicated by extinction of the first state signal from the multifunction pushbutton (16), particularly the steady light.

7. The method as claimed in claim 6, **characterized in that** the interrupted machining program is continued by operating the multifunction pushbutton (16), which closes the automatic protective doors (29) or activates the at least one access region (27, 28), and that preferably the multifunction pushbutton (16) indicates the closure of the automatic protective doors (29) or the activation of the at least one access region (27, 28) by means of the second state signal, particularly the flashing light.

8. The method as claimed in claim 5, **characterized in that** the interruption of the machining program and the unlocking of the manual protective doors (29) are indicated by a second state signal from the multifunction pushbutton (16), particularly a flashing light, and the second state signal from the multifunction pushbutton (16) is extinguished when at least one manual protective door (29) is opened.

9. The method as claimed in claim 8, **characterized in that** the machining program is continued by closing the at least one opened manual protective door (29) and then locking the manual protective doors (29) by operating the multifunction pushbutton (16) and that preferably that the multifunction pushbutton (16) indicates the locking of the manual protective doors (29) by means of the second state signal, particularly the flashing light.

10. The method as claimed in claim 7 or 9, **characterized in that** operating the multifunction pushbutton (16) again continues the interrupted machining program, and that preferably the continuation of the machining program is indicated by a change in the multifunction pushbutton (16) from the second state signal to the first state signal, particularly from the flashing light to the steady light.

11. The method as claimed in one of the preceding claims, **characterized in that** interruption of a machining program for a change of workpiece is indicated on the multifunction pushbutton (16) by a change, preferably extinction, in the first state signal, particularly the steady light.

12. The method as claimed in one of the preceding claims, **characterized in that** workpieces are loaded and unloaded from a loading compartment (34, 35) into the machining compartment (31) by means of at least one workpiece transporting apparatus (33) and that preferably that operating the multifunction pushbutton (16) during the change of workpiece stops the at least one workpiece transporting apparatus (33), and operating the multifunction pushbutton (16) again restarts it.

13. The method as claimed in claim 2, **characterized in that** in the "setting up a machine tool" mode of operation, operating the multifunction pushbutton (16) actuates the work steps of moving the workpiece transporting apparatus (33) from a loading compartment (34, 35) into the machining compartment (31) or from the machining compartment (31) into the loading compartment (34, 35).

14. The method as claimed in claim 13, **characterized in that**, as an additional work step, opening or closure of the access region (27, 28) is controlled by operating the multifunction pushbutton (16).

## Revendications

1. Procédé destiné à commander une machine d'usinage (24), notamment une machine d'usinage au laser, laquelle comprend un espace d'usinage (31) entouré d'une enceinte de protection (22), qui présente au moins une zone d'accès (27, 28) surveillée et qui est commandée, au moins pour mettre en marche la machine d'usinage (24), à partir d'un panneau de commande principal (21),
dans laquelle sont prévus un organe ou plusieurs organes de commande (12) qui sont disposés de manière décentralisée par rapport au panneau de commande principal (12) et qui sont respectivement équipés d'un bouton-poussoir multifonction (16), au moins un organe de commande (12) étant affecté à ladite au moins une zone d'accès (27, 28),
**caractérisé en ce que**
- l'actionnement du bouton-poussoir multifonction (16) permet d'activer respectivement une étape de travail d'un processus de commande qui vient juste après dans une suite répétée d'étapes successives du processus de commande,
- la machine d'usinage (24) est commandée soit de manière centrale à partir du panneau de commande principal (21) soit au moyen du bouton-poussoir multifonction (16), avec un organe ou plusieurs organes de commande (12) disposé(s) de manière décentralisée par rapport au panneau de commande principal, et
- les étapes de travail individuelles successives qui sont initiées soit de manière décentralisée par le bouton-poussoir ou les boutons-poussoirs multifonction (16) soit de manière centrale à partir du panneau de commande principal (21) sont synchronisées entre elles de telle sorte que la même étape de travail suivante du processus de commande peut être activée, en cas de sollicitation, à partir de chaque bouton-poussoir multifonction (16) et du panneau de commande principal (21).

2. Procédé selon la revendication 1, **caractérisé en ce que** la machine d'usinage (24) travaille dans au moins un mode de fonctionnement, notamment le mode "Usinage d'une pièce" ou "Réglage d'une machine à usiner", et **en ce que** pour chaque mode de fonctionnement est mise en mémoire une succession prédéfinie d'étapes de travail successives pour le processus de commande laquelle est activée par le bouton-poussoir multifonction (16).

3. Procédé selon la revendication 2, **caractérisé en ce que** dans le mode de fonctionnement "Usinage d'une pièce", l'usinage de la pièce à usiner est interrompue lors de l'actionnement du bouton-poussoir multifonction (16).

4. Procédé selon la revendication 2 ou 3, **caractérisé en ce que** dans le mode de fonctionnement "Usinage d'une pièce", le bouton-poussoir ou les boutons-poussoirs multifonction (16) indique(nt) l'usinage d'une pièce à usiner à l'aide d'un premier signal d'état, notamment d'une lumière continue.

5. Procédé selon l'une quelconque des revendications 2 à 4, **caractérisé en ce que** dans un mode de fonctionnement "Usinage d'une pièce", l'usinage de la pièce à usiner (32) conformément à un programme d'usinage donné est interrompu par actionnement du bouton-poussoir multifonction (16) et **en ce que** de préférence l'interruption de l'usinage dans le mode de fonctionnement "Usinage d'une pièce" est indiquée par un changement du premier signal d'état du bouton-poussoir multifonction (16), notamment de la lumière continue.

6. Procédé selon la revendication 5, **caractérisé en ce qu'**en plus de l'interruption de l'usinage, un verrouillage des portes de sécurité (29) est déverrouillé dans le cas de portes de protection manuelles (29) ou dans le cas de portes de sécurité automatiques (29) au moins une porte de sécurité (29) est ouverte ou une surveillance de ladite au moins une zone d'accès (27, 28) est désactivée, et **en ce que** de préférence l'interruption du programme d'usinage et l'ouverture des portes de sécurité automatiques (29) ou la désactivation de ladite au moins une zone d'accès (27, 28) sont indiquées par une extinction du premier signal d'état du bouton-poussoir multifonction (16), notamment de la lumière continue.

7. Procédé selon la revendication 6, **caractérisé en ce que** le bouton-poussoir multifonction (16) est actionné afin de poursuivre le programme d'usinage interrompu ce qui provoque une fermeture des portes de sécurité automatiques (29) ou une activation de ladite au moins une zone d'accès (27, 28), et **en ce que** de préférence le bouton-poussoir multifonction (16) indique au moyen du deuxième signal d'état, notamment de la lumière clignotante, la fermeture des portes de sécurité automatiques (29) ou l'activation de ladite au moins une zone d'accès (27, 28).

8. Procédé selon la revendication 5, **caractérisé en ce que** l'interruption du programme d'usinage et le déverrouillage des portes de sécurité manuelles (29) sont indiqués par un deuxième signal d'état du bouton-poussoir multifonction (16), notamment par une lumière clignotante, et que le deuxième signal d'état du bouton-poussoir multifonction (16) s'éteint lors de l'ouverture d'au moins une porte de sécurité manuelle (29).

9. Procédé selon la revendication 8, **caractérisé en ce que** ladite au moins une porte de sécurité manuelle ouverte (29) est fermée afin de poursuivre le programme d'usinage et que les portes de sécurité manuelles (29) sont ensuite verrouillées par actionnement du bouton-poussoir multifonction (16) et **en ce que** de préférence le bouton-poussoir multifonction (16) indique au
moyen du deuxième signal d'état, notamment de la lumière clignotante, le verrouillage des portes de sécurité manuelles (29).

10. Procédé selon la revendication 7 ou 9, **caractérisé en ce qu'**un nouvel actionnement du bouton-poussoir multifonction (16) provoque la poursuite du programme d'usinage interrompu et **en ce que** de préférence la poursuite du programme d'usinage est indiquée par un changement du signal d'état du bouton-poussoir multifonction (16) qui passe du deuxième au premier signal d'état, notamment de la lumière clignotante à la lumière continue.

11. Procédé selon l'une quelconque des revendications précédentes, **caractérisé en ce qu'**une interruption d'un programme d'usinage en vue d'un changement de pièce à usiner est indiquée au niveau du bouton-poussoir (16) par un changement, de préférence une extinction, du premier signal d'état, notamment de la lumière continue.

12. Procédé selon l'une quelconque des revendications précédentes, **caractérisé en ce qu'**un chargement et un déchargement de pièces à usiner depuis un espace de chargement (34, 35) vers un espace d'usinage (31) s'effectuent au moyen d'au moins un dispositif de transport de pièce à usiner (33) et **en ce que** de préférence un actionnement du bouton-poussoir multifonction (16) pendant le changement de pièce à usiner provoque l'arrêt dudit au moins un dispositif de transport de pièce à usiner (33) et qu'un nouvel actionnement du bouton-poussoir multifonction (16) provoque la remise en marche de celui-ci.

13. Procédé selon la revendication 2, **caractérisé en ce que** l'actionnement du bouton-poussoir multifonction (16) dans le mode de fonctionnement "Réglage d'une machine à usiner" provoque l'activation des étapes de travail consistant à déplacer le dispositif de transport de la pièce à usiner (33) d'un espace de chargement (34, 35) vers l'espace d'usinage (31) ou de l'espace d'usinage (31) vers l'espace de chargement (34, 35).

14. Procédé selon la revendication 13, **caractérisé en ce que** l'actionnement du bouton-poussoir multifonction (16) commande, en tant qu'étape de travail supplémentaire, une ouverture ou une fermeture de la zone d'accès (27, 28).
